# EUROPÄISCHE PATENTSCHRIFT

(11) **EP 3 496 959 B1**
(45) Veröffentlichungstag und Bekanntmachung des Hinweises auf die Patenterteilung: **13.05.2020**
(21) Anmeldenummer: 17727887.6
(22) Anmeldetag: 06.06.2017
(51) Int. Cl.: B60C 23/04, B60C 19/00, B29D 30/00

(54) **FAHRZEUGREIFEN**
VEHICLE TYRE
PNEUMATIQUE DE VÉHICULE

(30) Priorität: 09.08.2016 DE 102016214735
(43) Veröffentlichungstag der Anmeldung: 19.06.2019
(73) Patentinhaber: Continental Reifen Deutschland GmbH, 30165 Hannover (DE)
(72) Erfinder: KURZ, Martin, 30161 Hannover (DE); STRZELCZYK, Matthias, 31515 Wunstorf (DE); BUSCHE, Joachim, 31157 Sarstedt (DE)
(74) Vertreter: Widjaja, Wira
(86) Internationale Anmeldenummer: PCT/EP2017/063635
(87) Internationale Veröffentlichungsnummer: WO 2018/028850

(56) Entgegenhaltungen:
- EP-A2- 1 356 957
- EP-A2- 1 568 518
- WO-A1-99/29523
- DE-A1- 2 850 787
- US-A1- 2007 227 644

## Beschreibung

Die Erfindung betrifft einen Fahrzeugreifen.

Reifenmodule werden im Reifen für verschiedene Aufgaben eingesetzt. Zu den Aufgaben gehören z.B. eine Luftdrucküberwachung oder eine Temperaturmessung im Reifen.
Moderne Reifenmodule umfassen ein Elektronikmodul, in dem Sensorelemente und andere elektronische Bauteile angeordnet sind. Ein Beispiel für ein solches Reifenmodul offenbart die DE 102 43 441 A1.
Bei herkömmlichen Fahrzeugreifen, die beispielsweise mit einem Reifendruckkontrollmesssystem ausgestattet sind, ist es bislang nicht möglich, das Reifendruckkontrollsystem mit weiteren Sensoren im Reifen zu verbinden. Hierzu fehlt eine Infrastruktur, um die Sensoren im Reifen miteinander zu verbinden.

Weitere Anordnungen von Reifenmodulen und Sensoren in einem Fahrzeugreifen sind in DE 28 50 787 A1, EP 1 568 518 A2, EP 1 356 957 A2, US 2007/227644 A1 und WO 99/29523 A1 beschrieben.

Der Erfindung liegt die Aufgabe zugrunde, einen Fahrzeugreifen bereitzustellen, bei dem eine Infrastruktur bereit gestellt wird, um einzelne Sensoren untereinander oder mit einer Zentraleinrichtung zu verbinden.

Gelöst wird die Aufgabe gemäß dem Oberbegriff und den kennzeichnenden Merkmalen von Anspruch 1 dadurch, dass
mindestens eine elektrisch leitende Leiterbahn in Umfangsrichtung des Fahrzeugreifen und rundführend im Fahrzeugreifen angeordnet ist,
wobei an einer ersten Position der Leiterbahn ein Reifenmodul mit einer zentralen Funktion und mindestens an einer zweiten Position der Leiterbahn mindestens ein Sensor zur Erfassung von Reifeneigenschaften angeordnet ist.

Ein Vorteil der Erfindung ist insbesondere darin zu sehen, dass der Fahrzeugreifen eine einfache und optimale Infrastruktur aufweist, um einzelne Sensoren mit einer Zentraleinheit, beispielsweise in Form eines Reifenmoduls auf der Reifeninnenseite, miteinander zu verbinden. Eine oder eine Vielzahl von elektrisch leitenden Leiterbahnen sind in Umfangsrichtung des Fahrzeugreifens und rundführend im Fahrzeugreifen angeordnet. Dadurch können an diese Leiterbahn auf einfache Weise einzelne Sensoren und ein Reifenmodul mit einer zentralen Funktion angeschlossen werden. Die Leiterbahnen dienen dann entweder für eine Energieversorgung der Sensoren oder für eine Signalübertragung.
Die elektrisch leitenden Leiterbahnen sind rundführend über den gesamten Reifenumfang des Fahrzeugreifens angeordnet, wodurch die Sensoren an jeder Stelle im Fahrzeugreifen eingebaut und mit der Leiterbahn verbunden werden können.

In einer vorteilhaften Weiterbildung der Erfindung ist vorgesehen, dass die Leiterbahn auf der Reifeninnenseite rundführend und in Umfangsrichtung des Fahrzeugreifens angeordnet ist.
Die Anordnung der Leiterbahnen auf der Reifeninnenseite lässt sich besonders einfach durchführen. Außerdem können dadurch die Sensoren und das Reifenmodul auf einfache Weise an die Leiterbahnen angeschlossen werden.

In einer weiteren vorteilhaften Weiterbildung der Erfindung ist vorgesehen, dass die Leiterbahn zwischen einzelnen Reifenbauteilen rundführend und in Umfangsrichtung des Fahrzeugreifens angeordnet ist.
Denkbar ist beispielsweise, die Leiterbahnen direkt unter der Reifeninnenseite anzuordnen. Bei bestimmten Ausführungsformen können einzelne Sensoren dann einfacher an die Leiterbahnen angeschlossen werden.

In einer weiteren vorteilhaften Weiterbildung der Erfindung ist vorgesehen, dass die Leiterbahn zwischen der Reifeninnenschicht und einer Karkasslage des Fahrzeugreifens angeordnet ist.

In einer weiteren vorteilhaften Weiterbildung der Erfindung ist vorgesehen, dass die Leiterbahn aus einem metallischen Draht besteht.
Aufgrund der hohen elektrischen Leitfähigkeit von Metall können die Leiterbahnen sehr dünn ausgeführt werden.

In einer weiteren vorteilhaften Weiterbildung der Erfindung ist vorgesehen, dass die Leiterbahn aus einem flexiblen und elastischen Draht besteht.
Dadurch besitzen die Leiterbahnen eine hohe Dauerhaltbarkeit.

In einer weiteren vorteilhaften Weiterbildung der Erfindung ist vorgesehen, dass die Leiterbahn aus einem elektrisch leitfähigen Fluidmaterial besteht, wobei das Fluidmaterial im getrockneten Zustand eine Leiterbahn bildet.
Bei dieser Auführungsform handelt es sich um eine sogenannte leitfähige Tinte, die austrocknet und dann eine leitfähige Leiterbahn bildet.

In einer weiteren vorteilhaften Weiterbildung der Erfindung ist vorgesehen, dass die Leiterbahn aus einem elektrisch leitfähigen Gummimaterial besteht.
Der Einsatz von leitfähigem Gummimaterial bietet den Vorteil, dass diese Leiterbahnen auf einfache Weise bei der Reifenherstellung mit Reifenbautrommeln appliziert werden können.

Erfindungsgemäß ist vorgesehen, dass eine Vielzahl von Leiterbahnen rundführend über den gesamten Umfang des Fahrzeugreifens angeordnet sind, wobei mindestens eine der Leiterbahnen für eine Energieversorgung und mindestens eine zweite Leiterbahn für eine Signalübertragung eingesetzt wird.
Dadurch kann eine sichere Signalübertragung und Energieversorgung gewährleistet werden.

In einer weiteren vorteilhaften Weiterbildung der Erfindung ist vorgesehen, dass das Reifenmodul mit der zentralen Funktion eine Batterie, eine Sende- und Empfangseinheit sowie einen Reifendruck-Sensor umfasst.
Auf diese Weise kann eine einfache und sichere Datenübetragung zwischen dem Reifenmodul und einer zentralen Empfangseinheit im Fahrzeug gewährleistet werden.

In einer weiteren vorteilhaften Weiterbildung der Erfindung ist vorgesehen, dass der an der Leiterbahn angeschlossenen Sensor ein Temperatur-Sensor, ein Sensor zur Messung von Deformationen, ein Sensor zur Bestimmung eines Reifenabriebs oder ein Sensor zur Bestimmung eines Reifendefektes ist.
Dadurch weist der Fahrzeugreifen eine Vielzahl von unterschiedlichen Sensoren auf, mit denen unterschiedliche Eigenschaften des Reifens gemessen und überwacht werden können.

Anhand von Ausführungsbeispielen soll die Erfindung näher erläutert werden. Es zeigen:
Fig. 1: einen Reifenabschnitt in einer dreidimensionalen Darstellung mit einem ersten Ausführungsbeispiel
Fig. 2: einen Reifenabschnitt in einer dreidimensionalen Darstellung mit einem zweiten Ausführungsbeispiel

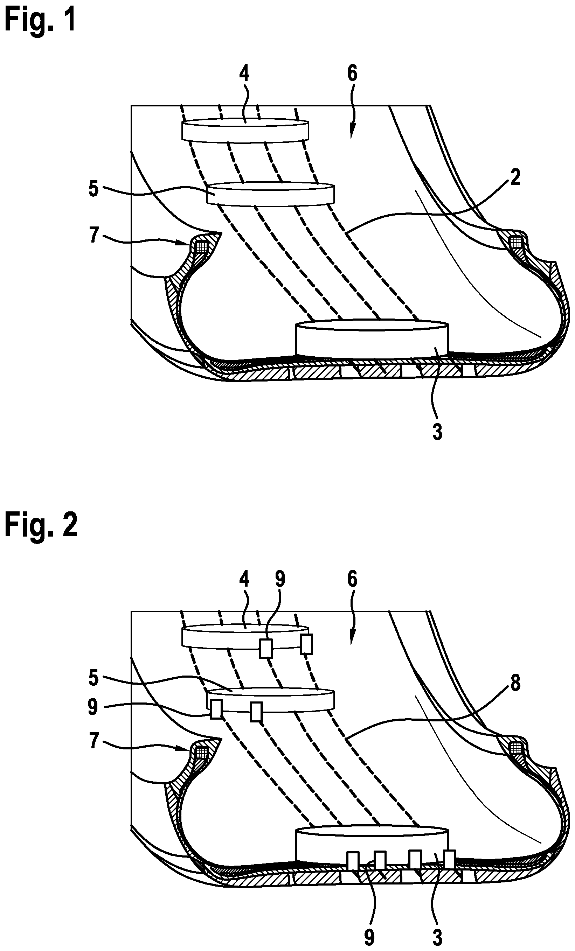

Fig. 1 zeigt ein Ausführungsbeispiel. Das Reifenmodul 3 umfasst u.a. Sensoren, ein elektronisches Bauteil mit einem aktiv sendenden Element und einen elektronischen Speicher sowie eine Stromversorgung, z.B. in Form einer Batterie. Im Speicher können reifenspezifische Daten gespeichert und verarbeitet werden. Diese Daten können über Funksignale an fahrzeuginterne oder -externe Empfänger weitergeleitet werden.
Im Reifenmodul 3 ist ein Elektronikmodul angeordnet, welches mindestens ein Reifendruckmesssystem mit einem Drucksensor umfasst. Das Reifenmodul umfasst außerdem einen Container, der aus einem Elastomermaterial oder aus einer Vergussmasse besteht.

Das Reifenmodul 3 hat bei diesem Ausführungsbeispiel eine zentrale Funktion, weil es eine Energieversorgung in Form einer Batterie aufweist und mit einer Sende- und Empfangsvorrichtung ausgestattet ist. Das Reifenmodul 3 kann daher den ersten Sensor 4 und den zweiten Sensor 5 über die umlaufenden elektrischen Leiterbahnen 2 mit Energie in Form von Strom versorgen. Bei diesem Ausführungsbeispiel sind insgesamt vier rundführende und umlaufende Leiterbahnen 2 angeordnet, die eine Vielzahl von Sensoren mit dem zentralen Reifenmodul 3 verbinden. Die Leiterbahnen sind bei dieser Ausführung direkt auf der Reifeninnenseite 6 angeordnet. Dadurch können die Sensoren und das Reifenmodul einfach mit den dargestellten Leiterbahnen verbunden werden. Die Leiterbahnen 2 sind rundführend über den gesamten Umfang des Fahrzeugreifens angeordnet. Dadurch können die Sensoren an jeder Stelle im Fahrzeugreifen positioniert sein.

Fig. 2 zeigt ein weiteres Ausführungsbeispiel. Das Reifenmodul 3 mit der zentralen Funktion ist wiederum auf der Reifeninnenseite 6 angeordnet. Die gestrichelten Linien 8 zeigen die durch die Reifeninnenseite verdeckten Leiterbahnen, die ebenfalls rundführend über den gesamten Umfang des Fahrzeugreifens angeordnet sind. Die Leiterbahnen 8 sind beispielsweise zwischen der ersten Karkasslage und der Reifeninnenseite angeordnet. Die Verbindungsmittel 9 sind elektrische Kontaktierungen zwischen den Sensoren und dem Reifenmodul, die durch die Reifeninnenseite 6 hindurchgeführt sind. Die Leiterbahnen 8 können aus einzelnen metallischen Drähten oder aus elektrisch leitfähigem Gummimaterial bestehen. Außerdem können die Leiterbahnen aus einem elektrisch leitfähigem Fluidmaterial hergestellt werden.

### Bezugszeichenliste

### (ist Teil der Beschreibung)

- 1: Fahrzeugreifen
- 2: Rundführende und umlaufende Leiterbahn
- 3: Reifenmodul bzw. Zentraleinheit
- 4: Erster Sensor
- 5: Zeiter Sensor
- 6: Reifeninnenseite
- 7: Reifenwulst
- 8: Rundführende und umlaufende Leiterbahn unter der Reifeninnenschicht
- 9: Elektrische Kontaktierung durch die Reifeninnenschicht

## Patentansprüche

1. Fahrzeugreifen mit einem Laufstreifen, zwei Seitenwänden, einer Reifeninnenseite (6), einem Reifenhohlraum, mindestens einer Karkasslage mit parallel zueinander ausgerichteten Festigkeitsträgern und einer Gürtellage mit parallel zueinander ausgerichteten Festigkeitsträgern,
wobei mindestens ein Reifenmodul (3) im Reifenhohlraum angeordnet ist,
wobei das Reifenmodul (3) ein Elektronikmodul mit einer Vielzahl von integrierten elektronischen Bauteilen umfasst,
**dadurch gekennzeichnet, dass**
eine Vielzahl von elektrisch leitenden Leiterbahnen (2) in Umfangsrichtung des Fahrzeugreifens und rundführend über den gesamten Umfang des Fahrzeugreifens im Fahrzeugreifen angeordnet sind, wobei mindestens eine der Leiterbahnen (2) für eine Energieversorgung und mindestens eine zweite Leiterbahn für eine Signalübertragung eingesetzt wird,
wobei an einer ersten Position der Leiterbahn (2) ein Reifenmodul (3) mit einer zentralen Funktion und mindestens an einer zweiten Position der Leiterbahn (2) mindestens ein Sensor (4, 5) zur Erfassung von Reifeneigenschaften angeordnet ist.

2. Fahrzeugreifen nach Anspruch 1,
**dadurch gekennzeichnet, dass**
die Leiterbahn (2) auf der Reifeninnenseite (6) rundführend und in Umfangsrichtung des Fahrzeugreifens angeordnet ist.

3. Fahrzeugreifen nach einem der vorhergehenden Ansprüche,
**dadurch gekennzeichnet, dass**
die Leiterbahn (2) zwischen einzelnen Reifenbauteilen rundführend und in Umfangsrichtung des Fahrzeugreifens angeordnet ist.

4. Fahrzeugreifen nach einem der vorhergehenden Ansprüche,
**dadurch gekennzeichnet, dass**
die Leiterbahn (2) zwischen der Reifeninnenschicht und einer Karkasslage des Fahrzeugreifens angeordnet ist.

5. Fahrzeugreifen nach einem der vorhergehenden Ansprüche,
**dadurch gekennzeichnet, dass**
die Leiterbahn (2) aus einem metallischen Draht besteht.

6. Fahrzeugreifen nach einem der vorhergehenden Ansprüche,
**dadurch gekennzeichnet, dass**
die Leiterbahn (2) aus einem flexiblen und elastischen Draht besteht.

7. Fahrzeugreifen nach einem der vorhergehenden Ansprüche,
**dadurch gekennzeichnet, dass**
die Leiterbahn (2) aus einem elektrisch leitfähigen Fluidmaterial besteht, wobei das Fluidmaterial im getrockneten Zustand eine Leiterbahn bildet.

8. Fahrzeugreifen nach einem der vorhergehenden Ansprüche,
**dadurch gekennzeichnet, dass**
die Leiterbahn (2) aus einem elektrisch leitfähigen Gummimaterial besteht.

9. Fahrzeugreifen nach einem der vorhergehenden Ansprüche,
**dadurch gekennzeichnet, dass**
das Reifenmodul (3) mit der zentralen Funktion eine Batterie, eine Sende- und Empfangseinheit sowie einen Reifendruck-Sensor umfasst.

10. Fahrzeugreifen nach einem der vorhergehenden Ansprüche,
**dadurch gekennzeichnet, dass**
der an der Leiterbahn (2) angeschlossenen Sensor (4, 5) ein Temperatur-Sensor, ein Sensor zur Messung von Deformationen, ein Sensor zur Bestimmung eines Reifenabriebs oder ein Sensor zur Bestimmung eines Reifendefektes ist.

## Claims

1. Vehicle tyre having a tread, two sidewalls, one tyre internal side (6), one tyre cavity, at least one carcass ply having reinforcement members aligned so as to be mutually parallel, and one breaker belt ply having reinforcement members aligned so as to be mutually parallel,
wherein at least one tyre module (3) is disposed in the tyre cavity;
wherein the tyre module (3) comprises an electronics module having a multiplicity of integrated electronic components,
**characterized in that**
a multiplicity of electrically conductive strip conductors (2) are disposed in the circumferential direction of the vehicle tyre in the vehicle tyre so as to be encircling over the entire circumference of the vehicle tyre, wherein at least one of the strip conductors (2) is used for supplying power, and at least a second strip conductor is used for transmitting signals;
wherein a tyre module (3) having a central function is disposed at a first position of the strip conductor (2), and at least one sensor (4, 5) for detecting tyre properties is disposed at least at a second position of the strip conductor (2).

2. Vehicle tyre according to Claim 1,
**characterized in that**
the strip conductor (2) on the tyre internal side (6) is disposed so as to be encircling and in the circumferential direction of the vehicle tyre.

3. Vehicle tyre according to one of the preceding claims,
**characterized in that**
the strip conductor (2) is disposed so as to be encircling between individual tyre components and in the circumferential direction of the vehicle tyre.

4. Vehicle tyre according to one of the preceding claims,
**characterized in that**
the strip conductor (2) is disposed between the tyre internal layer and a carcass ply of the vehicle tyre.

5. Vehicle tyre according to one of the preceding claims,
**characterized in that**
the strip conductor (2) is composed of a metallic wire.

6. Vehicle tyre according to one of the preceding claims,
**characterized in that**
the strip conductor (2) is composed of a flexible and elastic wire.

7. Vehicle tyre according to one of the preceding claims,
**characterized in that**
the strip conductor (2) is composed of an electrically conductive fluid material, wherein the fluid material in the dried state forms a strip conductor.

8. Vehicle tyre according to one of the preceding claims,
**characterized in that**
the strip conductor (2) is composed of an electrically conductive rubber material.

9. Vehicle tyre according to one of the preceding claims,
**characterized in that**
the tyre module (3) having the central function comprises a battery, a transmitting and receiving unit, as well as a tyre pressure sensor.

10. Vehicle tyre according to one of the preceding claims,
**characterized in that**
the sensor (4, 5) connected to the strip conductor (2) is a temperature sensor, a sensor for measuring deformations, a sensor for determining tyre wear, or a sensor for determining a tyre defect.

## Revendications

1. Pneu de véhicule comprenant une bande de roulement, deux parois latérales, un côté inférieur de pneu (6), un espace creux de pneu, au moins une couche de carcasse pourvue d'éléments de renforcement orientés en parallèle les uns des autres et une couche de ceinture pourvue d'éléments de renforcement orientés en parallèle les uns des autres,
au moins un module de pneu (3) étant disposé dans l'espace creux de pneu,
le module de pneu (3) comportant un module électronique pourvu d'une pluralité de composants électroniques, **caractérisé en ce que**
une pluralité de pistes conductrices (2) électriquement conductrices sont disposées dans le pneu du véhicule dans la direction circonférentielle du pneu de véhicule et en suivant un tracé circulaire sur la totalité du pourtour du pneu du véhicule, au moins l'une des pistes conductrices (2) étant utilisée pour une alimentation en énergie et au moins une deuxième piste conductrice pour une transmission de signal,
un module de pneu (3) ayant une fonction centrale étant disposé à une première position de la piste conductrice (2) et au moins un capteur (4, 5) destiné à détecter des propriétés du pneu à une deuxième position de la piste conductrice (2).

2. Pneu de véhicule selon la revendication 1, **caractérisé en ce que** la piste conductrice (2) est disposée selon un tracé circulaire sur le côté intérieur de pneu (6) et dans la direction circonférentielle du pneu de véhicule.

3. Pneu de véhicule selon l'une des revendications précédentes, **caractérisé en ce que** la piste conductrice (2) est disposée selon un tracé circulaire entre les éléments constitutifs individuels du pneu et dans la direction circonférentielle du pneu de véhicule.

4. Pneu de véhicule selon l'une des revendications précédentes, **caractérisé en ce que** la piste conductrice (2) est disposée entre la couche intérieure de pneu et une couche carcasse du pneu de véhicule.

5. Pneu de véhicule selon l'une des revendications précédentes, **caractérisé en ce que** la piste conductrice (2) se compose d'un fil métallique.

6. Pneu de véhicule selon l'une des revendications précédentes, **caractérisé en ce que** la piste conductrice (2) se compose d'un fil flexible et élastique.

7. Pneu de véhicule selon l'une des revendications précédentes, **caractérisé en ce que** la piste conductrice (2) se compose d'un matériau fluide électriquement conducteur, le matériau fluide formant, à l'état sec, une piste conductrice.

8. Pneu de véhicule selon l'une des revendications précédentes, **caractérisé en ce que** la piste conductrice (2) se compose d'un matériau à base de caoutchouc électriquement conducteur.

9. Pneu de véhicule selon l'une des revendications précédentes, **caractérisé en ce que** le module de pneu (3) ayant la fonction centrale comporte une batterie, une unité d'émission et de réception ainsi qu'un capteur de pression de pneu.

10. Pneu de véhicule selon l'une des revendications précédentes, **caractérisé en ce que** le capteur (4, 5) raccordé à la piste conductrice (2) est un capteur de température, un capteur destiné à mesurer des déformations, un capteur destiné à déterminer une usure du pneu ou un capteur destiné à déterminer un défaut du pneu.
